# EUROPÄISCHE PATENTSCHRIFT

(11) **EP 1 057 671 B1**
(45) Veröffentlichungstag und Bekanntmachung des Hinweises auf die Patenterteilung: **22.12.2004**
(21) Anmeldenummer: 00250170.8
(22) Anmeldetag: 31.05.2000
(51) Int. Cl.: B60J 5/04, B60J 5/00, B62D 25/00, B32B 5/18

(54) **Karosserieteil für Kraftfahrzeuge sowie Verfahren zu dessen Herstellung**
Body part for motor vehicles and its production method
Pièce de carosserie pour véhicules automobiles et sa méthode de production

(30) Priorität: 01.06.1999 DE 19925840
(43) Veröffentlichungstag der Anmeldung: 06.12.2000
(73) Patentinhaber: Brose Fahrzeugteile GmbH & Co. KG, Coburg, 96450 Coburg (DE)
(72) Erfinder: Feder, Roland, 96479 Weitramsdorf (DE)
(74) Vertreter: Ninnemann, Detlef, Dipl.-Ing.

(56) Entgegenhaltungen:
- EP-A- 0 414 302
- DE-A- 4 444 546
- DE-A- 19 723 740
- GB-A- 2 311 966

## Beschreibung

Die Erfindung betrifft ein Karosserieteil für Kraftfahrzeuge nach dem Oberbegriff des Anspruchs 1 sowie ein Verfahren zu dessen Herstellung nach dem Oberbegriffs des Anspruchs 23.

Der erfindungsgemäße Gegenstand ist insbesondere als Fahrzeugtür, Motorhaube oder Radkasten einsetzbar.

Großflächige Karosserieteile werden aus Gründen der besseren Bauteilsteifigkeit mit einem Rahmen versehen, auf den eine überwiegend glattflächige, geschlossene Außenhaut aufgebracht ist. Ein solcher Aufbau ist insbesondere bei Fahrzeugtüren üblich.

In der DE 195 37 504 ist ein solcher Türaufbau beschrieben, bei dem ein Türaußenblech, das den äußeren Abschluß der Fahrzeugkarosserie bildet, an einem als Rahmen ausgebildeten Türbasisteil befestigt ist. Das Türaußenblech wird üblicherweise mittels Punktschweißen mit dem Rahmen verbunden und übernimmt tragende Funktionen. Auf der dem Fahrzeuginnenraum zugewandten Seite der Fahrzeugtür ist eine Türinnenverkleidung an dem Rahmen angebracht, so daß ein Hohlraum zwischen der Türinnenverkleidung und dem Türaußenblech entsteht, in dem Funktionselemente der Tür wie Fensterheber, Seitenairbags oder Türlautsprecher angeordnet sind. Üblicherweise ist eine schichtartige Dichtung vorgesehen, die die elektrischen Funktionselemente der Tür von dem Naßraum trennt.

Ein solches Karosserieteil weist ein relativ hohes Gewicht auf und stellt hohe Anforderungen an die Verbindungstechnik, insbesondere im Bereich der Sichtteile. Ebenso ist die Zugänglichkeit bei der Montage von Bauteilen, wie z.B. dem Schloß, mitunter schwierig.

Aufgabe der vorliegenden Erfindung ist es, ein Karosserieteil bereitzustellen, das einfach und kostengünstig herzustellen ist und ein im Vergleich zu den herkömmlichen Karosserieteilen geringes Gewicht aufweist.

Erfindungsgemäß wird diese Aufgabe durch ein Karosserieteil mit den Merkmalen des Anspruchs 1 sowie durch ein Verfahren zu dessen Herstellung mit den Merkmalen des Anspruchs 23 gelöst.

Die Umschäumung des Rahmens mit einem Schaumstoff und die Befestigung der Außenhaut über dem Schaumstoff an dem Rahmen gewährleistet aufgrund der Stützfunktion des Schaumstoffes eine hohe Stabilität des Karosserieteils auch bei einer sehr geringen Materialstärke der Außenhaut. Einprägungen oder Sicken in der Außenhaut, um ein Flattern dünner Außenbleche zu verhindern, sind nicht erforderlich, ebenso kann auf zusätzlich Hinterlegungen oder Verstärkungen verzichtet werden.

Vorteilhafterweise ist die Außenhaut mit dem Schaumstoff verklebt oder verschweißt, wobei sich hier ein Ultraschallverschweißen der Außenhaut mit dem Schaumstoff anbietet.

Alternativ zu der stoffschlüssigen Befestigung der Außenhaut mittels Schweißen, können an dem Schaumstoff Befestigungselemente ausgebildet sein, an denen die Außenhaut formschlüssig befestigt wird. Solche Befestigungselemente können beispielsweise in Gestalt von Laschen oder Hinterschneidungen ausgebildet sein, in die korrespondierenden Einrichtungen der Außenhaut eingreifen. Denkbar sind auch angeformte Clipselemente.

Eine profilierte Gestaltung der der Außenhaut zugewandten Seite des Schaumstoffes ermöglicht insbesondere beim Verschweißen von Außenhaut und Schaumstoff, daß sich verflüssigender Schaumstoff in die Zwischenräume der Erhebungen fließen kann. Es ist kein überschüssiges Material vorhanden, das entfernt werden müßte. Bei der Fertigung des Karosserieteils müssen daher keine separaten Ablaufkanäle sowie Vorrichtungen zum Auffangen des schmelzenden Schaumstoffes vorgesehen werden, da lediglich eine Umverteilung des Schaumstoffmaterials stattfindet.

Ebenso können auf der zur Außenhaut hin gerichteten Seite der Erhebungen Klebstoffe aufgetragen werden, die nach Aufbringen einer entsprechenden Montagekraft mit der Außenhaut in Kontakt treten und so eine Klebeverbindung herstellen. Die Erhebungen sind dabei so dimensioniert, daß beim Ausgleich sämtlicher Fertigungstoleranzen während der Befestigung jede Erhebung entweder an der Außenhaut zumindest teilweise anliegt oder vollständig zusammengedrückt oder weggeschmolzen wird. Dies bedeutet, daß bei Ausschöpfung der maximalen Fertigungstoleranz die Außenhaut mit jeder Erhebung in Berührung tritt, so daß sämtliche Erhebungen an der Befestigung der Außenhaut beteiligt sind. Bei minimaler Fertigungstoleranz werden die Erhebungen weggeschmolzen oder zusammengepreßt, so daß eine vollflächige Anlage der Außenhaut an dem Schaumstoff gegeben ist.

Vorzugsweise sind das Volumen der Erhebungen, also das Wegschmelzvolumen, und das Volumen der Räume zwischen den Erhebungen, im wesentlichen gleich groß, so daß das weggeschmolzenen Schaummaterial in die Hohlräume zwischen den Erhebungen einfließen kann.

Aufgrund der neuartigen Konstruktion und der großflächigen Befestigung der Außenhaut auf dem Schaumstoff muß die Außenhaut nur noch einen geringen Beitrag zur Stabilität des gesamten Karosserieteils beitragen. Daher können auch Werkstoffe verwendet werden, die aufgrund ihrer geringen Eigenstabilität bisher nicht zur Herstellung von Karosserieteilen eingesetzt werden konnten, da bei den herkömmlichen Karosserieteilen eine Verschweißung an einem Rahmen vorgesehen ist. Ebenso können die Materialstärken der Außenhaut entsprechend reduziert werden.

In einer alternativen Ausgestaltung liegt die Außenhaut lediglich an den Erhebungen des profilierten Schaumstoffes an, d.h., es findet kein vollflächiges Anliegen der Außenhaut an dem Schaumstoff statt. Eine solche Befestigung erleichtert die Ausrichtung der Außenhaut auf dem Schaumstoff bzw. zu dem Rahmen.

Eine vollflächige Anlage der Außenhaut im montierten Zustand vermeidet die Gefahr einer Kondenswasserbildung in den Zwischenräumen und erübrigt einen separaten Korrosionsschutz der Außenhaut, sofern dieser aus einem korrosionsfähigen Werkstoff besteht. Neben der Ausbildung der Außenhaut aus einem vorgeformten Blechteil ist alternativ eine Ausgestaltung aus Kunststoff vorgesehen. Insbesondere hierbei ist es möglich, einen durchgefärbten Kunststoff zu verwenden, wodurch ein Lackieren des Karosserieteils unnötig wird.

Der Rahmen kann aus einem einzigen umgeformten Blechzuschnitt bestehen, beispielsweise durch Pressen bzw. Tiefziehen, oder aus mehreren entsprechend geformten Blechzuschnitten zusammengesetzt sein. Ebenso ist es möglich, diesen Rahmen einstückig in einem Urformverfahren, wie z.B. dem Gießen oder dem Spritzgießen, anzufertigen.

Neben Aufnahmeeinrichtungen für Scharniere oder einem Schloßkörper, sind an dem Rahmen auch Verstärkungselemente für einen Seitenaufprallschutz angeordnet. Vorteilhafterweise sind die Verstärkungselemente für den Seitenaufprallschutz mit den Aufnahmeeinrichtungen für die Scharniere bzw. den Schloßkörper verbunden, da die Aufnahmeeinrichtungen aufgrund der an diesen Stellen erhöhten Belastungen entsprechend belastbar dimensioniert sind. Die Verstärkungselemente können dabei entweder als gespannte Zugseile oder als Metallträger ausgebildet sein.

Ebenso ist es vorgesehen, in dem Rahmen Befestigungsmittel für Fensterheberschienen oder Umlenkelemente eines Seilfensterhebers anzuordnen, wodurch sich der Integrationsgrad des Karosserieteiles erhöht.

Neben der Ausbildung des Schaumstoffes als Kunststoffschaum, wobei hier insbesondere geschlossenporiger und ein entsprechend formstabiler Kunststoff verwendet wird, ist der Einsatz von Metallschaum vorgesehen, wodurch die Stabilität des Karosserieteils erhöht wird. Zusätzlich kann in dem Kunststoffschaum Verstärkungsmaterial eingearbeitet sein, das beispielsweise als ein Gewebe ausgebildet ist. Als Gewebe können hierbei entweder Naturfasern wie Hanf oder Kunstfasern wie Glas- oder Kohlefasern eingesetzt werden.

Es ist dabei günstig, den Rahmen dergestalt zu umschäumen, daß ein offenes Kastenprofil entsteht, also ein an einer Seite offener Hohlkörper. In den Hohlraum, der durch den Rahmen sowie die zur Außenhaut hin durch den Schaumstoff geschlossene Fläche gebildet wird, dient insbesondere zur Aufnahme eines Trägermoduls, in dem bzw. an dem Funktionselemente der Tür wie z.B. Fensterheber, Kabel oder Elektrobauteile bzw. Lautsprecher angeordnet sind. Dabei ist vorgesehen, daß das Trägermodul als Schaumteil ausgebildet ist, in das die Funktionselemente integriert sind, wobei die elektrischen und elektronischen Bauteile bevorzugt auf der Trockenraumseite des Trägermoduls angeordnet sind und die mechanischen Bauteile auf der Naßraumseite angeordnet werden können. Möglich ist jedoch auch, daß das Trägermodul als herkömmliches Blechbauteil gefertigt wird.

In einer Weiterbildung der Erfindung ist vorgesehen, daß die Kontur einer auf dem Kunststoff-Trägermodul befestigten Türinnenverkleidung im wesentlichen der Kontur der dem Fahrzeuginnenraum zugewandten Seite des Trägermoduls entspricht. Hierdurch erübrigt sich eine massive und entsprechend schwere Ausgestaltung der Türinnenverkleidung, die lediglich als Verkleidungsteil ohne zusätzliche Funktionen ausgebildet werden kann. Als Designoberfläche können folienartige Materialien z.B. aus Kunststoff, kaschierte Stoffe oder Leder verwendet werden, die auf einem Trägerteil aus einem dünnen und dementsprechend leichten Material aufgebracht sind.

Die Befestigung der Türinnenverkleidung auf dem Trägermodul erfolgt dabei durch Formrippen oder Clipse, wodurch eine einfache Montage gewährleistet wird. Möglich ist auch ein Bespannen des Trägermoduls mit dem entsprechenden Material der Innenverkleidung. Es werden keine zusätzlichen Abdeckteile benötigt, so daß insgesamt eine sehr leichte und kostengünstige sowie leicht austauschbare Innenverkleidung eingesetzt werden kann.

An dem Rahmen kann zusätzlich zur Führung einer Fensterscheibe ein Fensterrahmen befestigt sein, wodurch wahlweise eine Fahrzeugtür mit einem Fensterrahmen bzw. eine rahmenlose Fahrzeugtür gefertigt werden kann.

Bei dem erfindungsgemäßen Verfahren ist es insbesondere günstig, die Außenhaut erst nach dem Anbau des Rahmens an der Karosserie an dem Schaum zu befestigen, da auf diese Weise eine optimale Ausrichtung der Außenhaut an dem Gesamtfahrzeug ermöglicht wird. Dadurch kann trotz der unvermeidlichen Fertigungstoleranzen in dem Karosserierohbau ein gleichmäßiges Spaltmaß durch die individuelle Anpassung der Außenhaut in bezug auf die Karosserie bzw. die angrenzenden Karosserieteile ermöglicht werden.

Sofern eine Lackierung der Außenhaut vorgesehen ist, kann diese zusammen mit der Karosserie vorgenommen werden, so daß ein einheitlicher Farbton der gesamten Karosserie entsteht. Die Rohbautür mit dem umschäumten Rahmen muß dabei nicht lackiert werden und kann mitsamt der entsprechenden Funktionselemente bzw. Anbauteile in einem separaten Fertigungsvorgang montagefertig vorbereitet werden. Dadurch werden auch die Lackier- und Handhabungsverrichtungen vereinfacht.

Die Befestigung der Außenhaut an dem Schaumstoff erfolgt vorteilhafterweise bezüglich festgelegter Referenzpunkte, an denen die Außenhaut ausgerichtet wird. Diese Referenzpunkte können entweder vorab festgelegt werden oder im Rahmen einer während des Montagevorganges durchgeführten Messung des individuellen Fahrzeuges einzeln festgelegt werden. Auf diese Weise wird gewährleistet, daß jede Außenhaut optimal durch Handhabungsgeräte an der Rohbaukarosserie befestigt wird. So entsteht eine quasi maßgeschneiderte Außenhaut des Fahrzeuges, die sich an den Gegebenheiten des jeweiligen Karosserierohbaus orientiert.

Bei der Befestigung der Außenhaut wird der Schaumstoff je nach Befestigungsart bleibend verdichtet oder aufgeschmolzen.

Anhand von der in den Zeichnungen dargestellten Ausführungsbeispielen soll der der Erfindung zugrunde liegende Gedanke näher erläutert werden. Es zeigen:
- Fig. 1 -: eine Gesamtansicht einer Fahrzeugtür in Explosionsdarstellung;
- Fig. 1a -: eine Seitenansicht eines umschäumten Rahmens und einer Außenhaut;
- Fig. 1b: - eine Schnittdarstellung der Fig. 1a;
- Fig. 2: - eine Einzeldarstellung einer Außenhaut;
- Fig. 3 -: eine Einzeldarstellung eines Rahmens mitsamt Funktionselementen;
- Fig. 4 -: ein Trägermodul mit eingebauten Funktionsele- menten;
- Fig. 5 -: eine Einzeldarstellung einer Türinnenverklei- dung;
- Fig. 6: - einen umschäumten Rahmen sowie
- Fig. 7 -: verschiedene Karosserieteile in Teilschnittansicht.

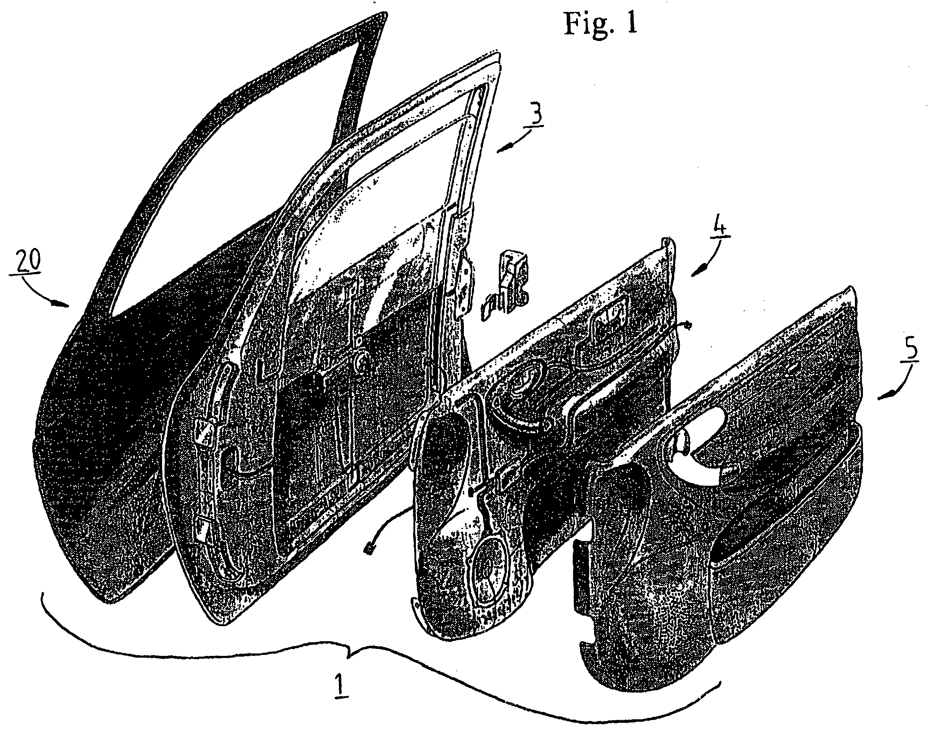

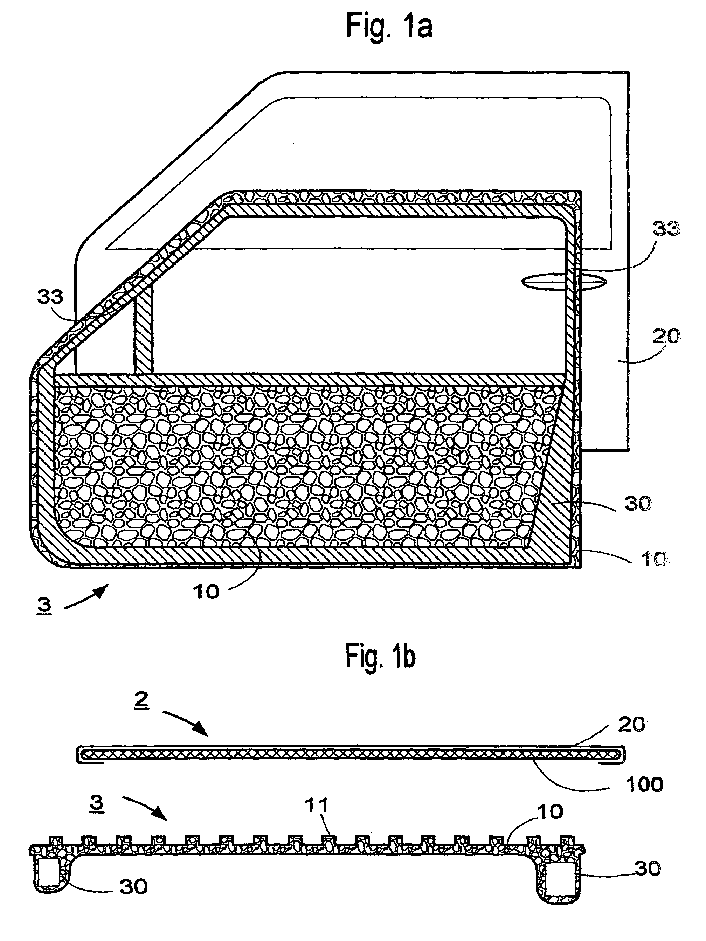

Fig. 1 zeigt eine Explosionsdarstellung einer Fahrzeugtür 1 mit einer Außenhaut 20, einem Türrahmenkörper 3, einem Trägermodul 4 sowie einer Türinnenverkleidung 5. An dem Schaumstoff des Türrahmenkörpers 3 ist die Außenhaut 20 befestigt, die den karosserieseitigen Abschluß der Fahrzeugtür 1 bildet. Die Außenhaut kann dabei aus einem Kunststoff oder einem anderen Material bestehen. Wird Metall als Werkstoff verwendet, spricht man von einem Türaußenblech, daß in der nachfolgenden Beschreibung die Bezugsziffer 2 zugeordnet ist.

In dem Rahmenkörper 3 selbst ist eine Fensterscheibe mitsamt Antrieb montiert. Die Fensterscheibe ist in seitlichen Führungen des Rahmenkörpers vertikal verschiebbar gelagert und wird durch einen an der Fensterscheibe direkt befestigten Antriebsmotor bewegt. Die Betätigung der Fensterscheibe erfolgt dabei über ein zwischen den horizontalen Holmen gespanntes Seil, das um eine an dem Antriebsmotor bzw. dessen Getriebe Seilrolle geschlungen ist. Je nach Drehrichtung des Motors bewegt sich die Fensterscheibe entlang der Führungen in einem Hohlraum, der durch den umschäumten Rahmenkörper 3 und dem Trägermodul 4 gebildet wird. Grundsätzlich sich auch andere Fensterhebersysteme, die von dem beschriebenen Ausführungsbeispiel abweichen, vorgesehen.

Das Trägermodul 4 wird von der Fahrzeuginnenseite her an dem Türrahmenkörper 3 befestigt, so daß sich ein Hohlraum bildet, in dem die Fensterscheibe auf- bzw. abfahren kann.

Den Abschluß in Richtung Fahrzeuginnenraum bildet die nicht selbsttragende Türinnenverkleidung 5, deren Kontur im wesentlichen der Kontur des Trägermoduls 4 entspricht.

Fig. 1a zeigt einen eingeschäumten Türrahmenkörper 3 und eine Außenhaut 20 in Seitenansicht, wobei die Außenhaut 20 den karosserieseitigen Abschluß einer Fahrzeugtür bildet. Der Türrahmenkörper 3 besteht aus einem Rahmen 30, der mit Schaumstoff 10 umspritzt ist. Die äußere Kontur des Türrahmenkörpers 3 entspricht dabei im wesentlichen der Kontur der Außenhaut 20, wodurch die Außenhaut 20 gestützt wird. Der Schaumstoff 10 bildet unterhalb des Fensterausschnittes eine geschlossene Oberfläche, so daß sich in Verbindung mit dem umschäumten Rahmen 30 ein einseitig offener Hohlraum ergibt. Bei der späteren Montage kommt die Außenhaut 20 auf dem Türrahmenkörper 3 zu liegen, wobei das Material der Außenhaut 20 durch den Schaumstoff 10 getragen wird.

In der Fig. 1b ist eine Schnittdarstellung der Fig. 1a gezeigt, bei der ein Türaußenblech 2 aus einer Außenhaut 20 sowie einem auf der Innenseite der Außenhaut 20 aufgebrachten Moderator 100 besteht. Dieser Moderator 100 ist beispielsweise aus einem Kunststoff gefertigt, der besonders gut mit dem Schaumstoff 10 verbunden werden kann. Lediglich in den Randbereichen kann eine Umbördelung des Moderators 100 durch das Türaußenblech 2 vorgesehen sein, um einen optisch günstigen Effekt zu erzielen. Grundsätzlich ist es jedoch vorgesehen, die Außenhaut 20 direkt auf dem Schaumstoff 10 zu befestigen. Der Vorteil eines Moderators 100 besteht darin, daß optisch weniger ansprechende Materialien eingesetzt werden können, da nur die Außenhaut 20 sichtbar ist. Auf diese Weise können die Kosten für die Herstellung des Türaußenbleches 2 reduziert werden.

Unterhalb des Türaußenbleches 2 ist eine Schnittdarstellung des Türrahmenkörpers 3 gezeigt, aus der hervorgeht, daß der Rahmen 30 vollständig mit Schaumstoff 10 umspritzt ist. Der Schaumstoff 10 schließt den Bereich zwischen den Rahmenholmen vollflächig ab, so daß eine Feuchtigkeitssperre entsteht. In Richtung auf das Türaußenblech 2 ist der Schaumstoff 10 profiliert ausgebildet und weist Erhebungen 11 auf, beispielsweise Rillen oder Noppen, die bei der Befestigung des Türaußenbleches 2 auf dem Türrahmenkörper 3 entweder bleibend verdichtet oder weggeschmolzen werden. Dies ist abhängig von der Art des Montageverfahrens.

Die Erhebungen 11 sind dabei dergestalt dimensioniert, daß bei der Befestigung des Türaußenbleches 2 auf dem Türrahmenkörper 3 die auftretenden Schwankungen der Fertigung der Karosserie ausgeglichen werden können. Dies bedeutet, daß bei dem ersten Kontakt des Türaußenbleches 2 mit den Erhebungen 11 des Türrahmenkörpers 3 das Türaußenblech 2 über die gewollte Position hinausragt und daß erst eine Fügebewegung in Richtung auf den Türrahmen 30 erfolgen muß, bevor die korrekte Position des Türaußenbleches 2 erreicht ist. Auf diese Weise wird gewährleistet, daß gleichmäßige Spaltmaße und eine optimale Ausrichtung des Türaußenbleches 2 in bezug auf die Gesamtkarosserie erreicht werden.

In die Räume zwischen den Erhebungen 11 kann bei einem Verschweißen der Außenhaut 20 mit dem Schaumstoff 10 verflüssigter Schaumstoff einfließen. Die Volumen der Erhebungen 11 und die Volumen der Zwischenräume sind vorteilhafterweise im wesentlichen gleich groß, so daß bei einem Aufschmelzen des Kunststoffes das aufgeschmolzene Material vollständig aufgenommen werden kann. Die Erhebungen 11 sind zudem dergestalt dimensioniert, daß bei einer Ausschöpfung der maximalen Fertigungstoleranzen eine sichere Befestigung der Außenhaut 20 auf dem Schaumstoff gewährleistet ist. Die Befestigung der Außenhaut 20 allein über die Fläche der Erhebungen 11 ist das eine Extrem der Ausschöpfung des Toleranzbereiches; das andere Extrem besteht darin, daß die Erhebungen 11 weggeschmolzen oder komprimiert werden und die Außenhaut 20 vollflächig an dem Schaumstoff anliegt. Zwischen diesen beiden Extremen sind sämtlichen Abstufungen möglich. Auf jeden Fall wird die relativ dünne Außenhaut 20 von einer stabilen Haltevorrichtung großflächig, im Extremfall vollflächig, bei ihrer Befestigung an dem Schaumstoff abgestützt.

Bei einem Verkleben der Außenhaut 20 an dem Türrahmenkörper 3 ist auf den Erhebungen 11, die als Rippen oder Noppen ausgebildet sind, ein entsprechender Klebstoff aufgetragen. Durch Verdichten des Schaumstoffes 10 in dem Bereich der Erhebungen 11 bei der Montage tritt die Außenhaut 20 bzw. der Moderator 100 in Kontakt mit dem Klebstoff und legt so das Türaußenblech 2 auf dem Türrahmenkörper 3 fest.

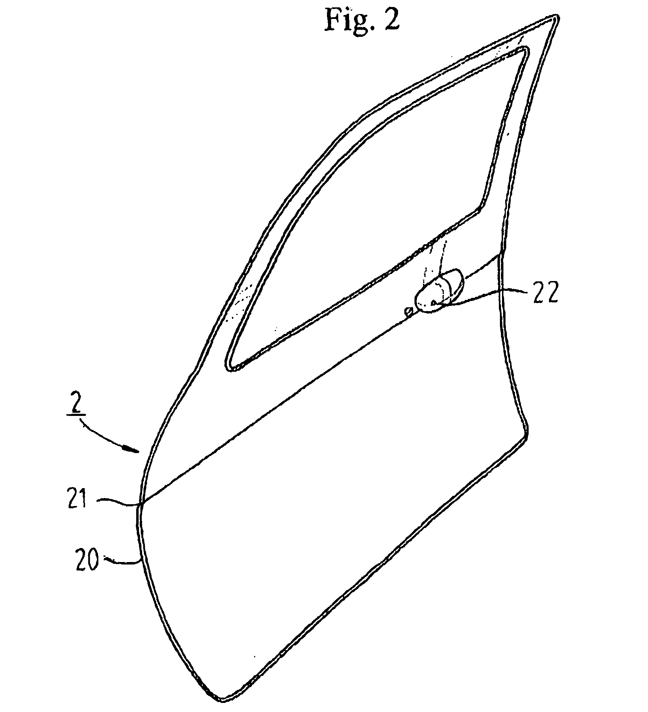

Fig. 2 zeigt ein Türaußenblech 2 in einer Einzeldarstellung, wobei die Außenhaut 20 aus einem Blech gefertigt wurde, das eine Profilierung 21 und eine Durchtrittsöffnung 22 für einen nicht dargestellten Türöffner aufweist.

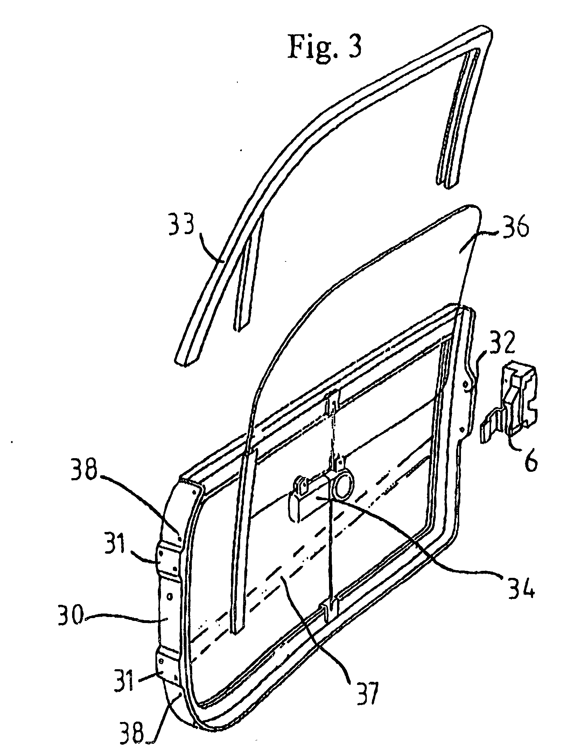

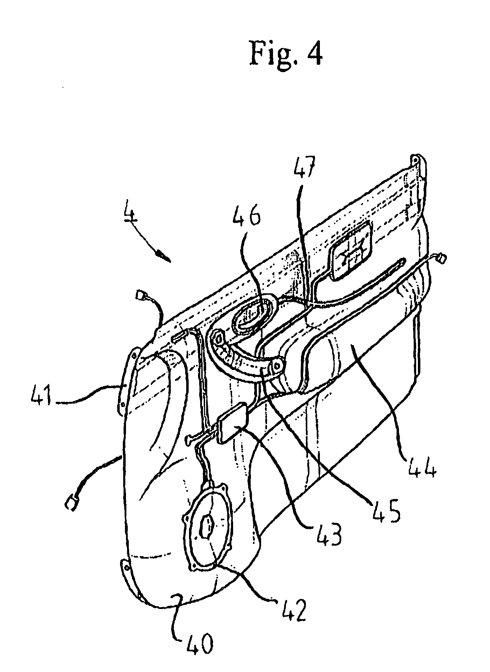

.In der Fig. 3 ist ein noch nicht umschäumter Rahmen 30 mit Scharnieraufnahmen 31 sowie einer Schloßaufnahme 32 gezeigt. An dieser Schloßaufnahme 32 wird ein Schloßkörper 6 über Schrauben befestigt. Ebenfalls an dem Rahmen 30 befestigt ist eine Führungsschiene 39, in der eine Fensterscheibe 36 des Fensterhebers geführt wird. In dem dargestellten Ausführungsbeispiel wird die Fensterscheibe 36 über einen direkt mit ihr verbundenen Fensterheberantrieb 34 über ein zwischen dem unteren und oberen Rahmenholm gespannten Seil bewegt. Es können jedoch auch andere Fensterhebersystme mit anderen Befestigungspunkten eingesetzt werden. Weiterhin sind an dem Rahmen 30 Befestigungsstellen 38 vorgesehen, an denen ein Trägermodul 4 gemäß der Fig. 4 befestigt werden kann.

In dem dargestellten Ausführungsbeispiel ist auf dem Rahmen 30 ein Fensterrahmen 33 montiert, der ebenfalls die Scheibe 36 führt. Alternativ dazu ist es möglich, auch eine Fahrzeugtür ohne Fensterrahmen 33 herzustellen. Durch Strichlinie angedeutet ist ein Verstärkungselement 37, das zwischen der Scharnieraufnahme 31 und der Schloßaufnahme 32 angeordnet ist. Dieses Verstärkungselement 37 kann entweder aus gespannten Zugseilen oder entsprechenden Trägern bestehen und dient zum Schutz gegen Seitenaufprall.

In der Fig. 4 ist ein Trägermodul 4 gezeigt, das aus einem Schaumteil 40 mit eingearbeiteten Funktionselementen besteht. In dem Schaumteil 40 sind ein Lautsprecher 42 eingelassen sowie Führungskanäle 47 für die Aufnahme elektrischer Leitungen eingearbeitet. Weiterhin ist ein Türsteuergerät 43 sowie ein Türöffner 46 in dem Schaumteil 40 eingearbeitet.

Ebenso ist eine Armlehne 44 ausgebildet, und ein Türgriff 45 ist zwischen der Armlehne und dem Schaumteil angebracht. In dem Trägermodul 4 ist darüber hinaus eine Schachtverstärkung 41 eingeschäumt, die an den Befestigungsstellen 38 des Rahmens 30 verschraubt bzw. montiert werden kann. Über die Schachtverstärkung 41 wird eine erhöhte Stabilität der gesamten Türkonstruktion erreicht.

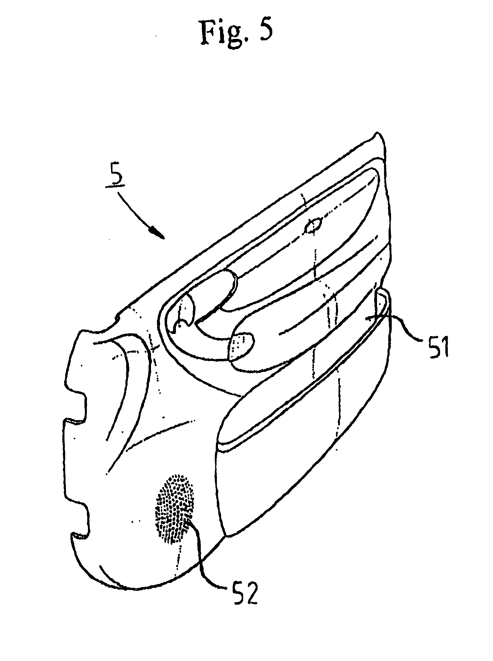

Fig. 5 zeigt eine Türinnenverkleidung 5, die den innenraumseitigen Abschluß der Fahrzeugtür bildet. In der Türinnenverkleidung 5 sind Schalldurchtrittsöffnungen 52 sowie ein Ablagefach 51 vorgesehen. Die Türinnenverkleidung 5 weist im wesentlichen die Kontur des Trägermoduls 4 auf und wird auf diesem lösbar, beispielsweise mittels Clipsverbinder oder anderer Befestigungselemente, befestigt.

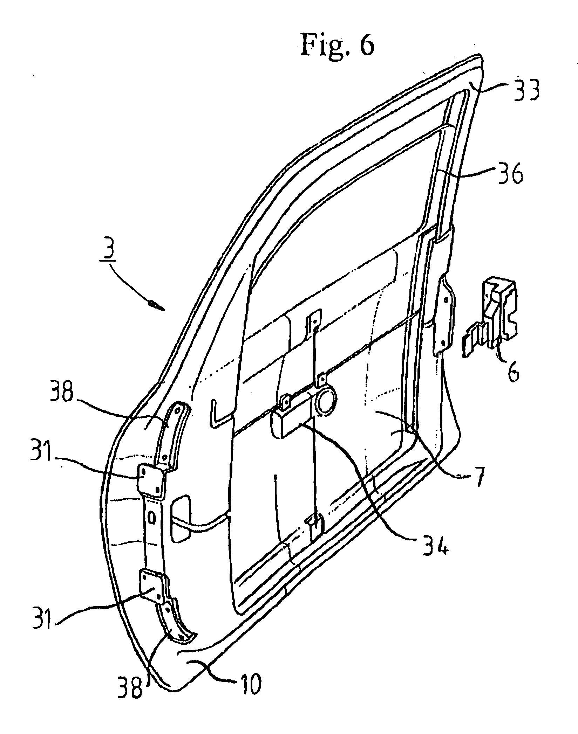

Fig. 6 zeigt einen bereits umschäumten Türrahmenkörper 3 gemäß der Fig. 3, wobei hier sehr deutlich zu erkennen ist, daß durch den Schaumstoff 10 in Verbindung mit dem Rahmen 30 ein Hohlraum 7 entsteht, der zur Aufnahme von Funktionselementen wie dem Fensterheber mit dem Antrieb geeignet ist.

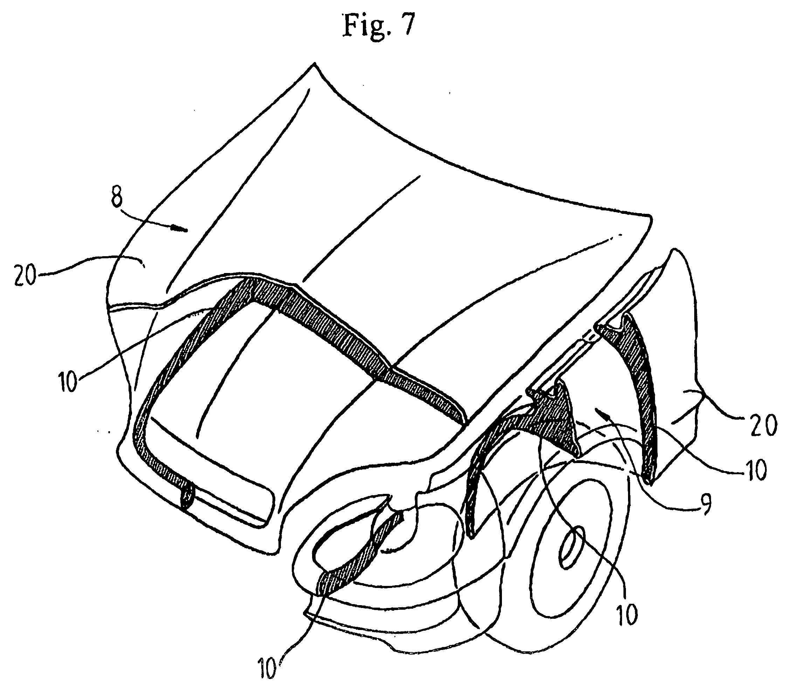

Fig. 7 zeigt verschiedene Schnitte durch eine Motorhaube 8 bzw. einen Radkasten 9, bei denen zu sehen ist, daß die Außenhaut 20 auf einem Schaumstoff 10 befestigt ist, wobei in dieser Darstellung der Rahmen nicht gezeigt ist.

Die Montage der Außenhaut 20 auf dem Schaumstoff 10 erfolgt vorteilhafterweise, nachdem der Rahmen an der entsprechenden Stelle des Fahrzeugrohbaus montiert ist. Dadurch wird gewährleistet, daß die Außenhaut 20 mit einem gleichmäßigen bzw. minimalen Spaltmaß an dem Fahrzeugrohbau befestigt wird. Zur Erreichung dieses minimalen bzw. gleichmäßigen Spaltmaßes ist vorgesehen, daß vor der Montage verschiedene Referenzpunkte an dem Fahrzeugrohbau mittels eines vorgeschalteten Meßverfahrens, beispielsweise einem berührungslosen Meßverfahren mittels eines Lasers, ermittelt werden.

Anhand dieser ermittelten Referenzpunkte wird das entsprechende Karosserieteil über geeignete Zuführeinrichtungen, in der Regel Roboter, auf dem umschäumten Türrahmenkörper 3 befestigt. Erfolgt die Befestigung mittels Verschweißen, beispielsweise mittels Ultraschallverschweißung, wird eventuell überstehendes Schaummaterial verflüssigt und kann in vorgesehene Hohlräume einfließen. Bei einem Verkleben wird der Schaumstoff 10 entsprechend komprimiert, so daß die gewünschte Position der Außenhaut an der Fahrzeugkarosserie erreicht wird.

Ein Vorteil der Erfindung besteht u.a. darin, daß die Außenhaut 20 reversibel auf dem Schaumstoff 10 befestigt wird, d.h., daß durch Aufbringen von thermischer Energie entweder Korrekturen an der Position der Außenhaut 20 vorgenommen werden können bzw. daß die Außenhaut zum Zwecke der Reparatur oder des Austausches komplett von dem Schaumstoff 10 und damit von dem Türrahmenkörper 3 getrennt werden kann.

### Bezugszeichenliste

- 1: Fahrzeugtür
- 2: Türaußenblech
- 3: Türrahmenkörper
- 4: Trägermodul
- 5: Türinnenverkleidung
- 6: Schloßkörper
- 7: Hohlraum
- 8: Motorhaube
- 9: Radkasten
- 10: Schaumstoff
- 11: Erhebung
- 20: Außenhaut
- 21: Profilierung
- 22: Durchtrittsöffnung
- 30: Rahmen
- 31: Scharnieraufnahme
- 32: Schloßaufnahme
- 33: Fensterrahmen
- 34: Fensterheberantrieb
- 36: Fensterscheibe
- 37: Verstärkungselement
- 38: Befestigungsstelle
- 40: Schaumteil
- 41: Schachtverstärkung
- 42: Lautsprecher
- 43: Türsteuergerät
- 44: Armlehne
- 45: Griff
- 46: Türöffner
- 47: Führungskanal
- 51: Ablagefach
- 52: Schalldurchtrittsöffnung
- 100: Moderator

## Patentansprüche

1. Karosserieteil für Kraftfahrzeuge, insbesondere eine Fahrzeugtür, eine Motorhaube oder ein Radkasten, mit einem tragenden Rahmen und einer den äußeren Abschluß des Karosserieteils bildenden Außenhaut,
**dadurch gekennzeichnet,**
**daß** der Rahmen (30) mit einem Schaumstoff (10) umschäumt ist und die Außenhaut (20) über den Schaumstoff (10) an dem Rahmen (30) befestigt ist.

2. Karosserieteil nach Anspruch 1, **dadurch gekennzeichnet, daß** die Außenhaut (20) mit dem Schaumstoff (10) verklebt oder verschweißt ist.

3. Karosserieteil nach Anspruch 1, **dadurch gekennzeichnet, daß** an dem Schaumstoff (10) Befestigungselemente zur formschlüssigen Befestigung der Außenhaut (20) ausgebildet sind.

4. Karosserieteil nach einem der voranstehenden Ansprüche, **dadurch gekennzeichnet, daß** der Schaumstoff (10) auf der der Außenhaut (20) zugewandten Seite profiliert ausgebildet ist.

5. Karosserieteil nach Anspruch 4, **dadurch gekennzeichnet, daß** die Außenhaut (20) an Erhebungen (11), die insbesondere als Rippen oder Noppen ausgebildet sind, des profilierten Schaumstoffes (10) anliegt.

6. Karosserieteil nach Anspruch 5, **dadurch gekennzeichnet, daß** die Erhebungen (11) dergestalt dimensioniert sind, daß beim Ausgleich aller Toleranzen während der Befestigung jede Erhebung entweder an der Außenhaut (20) zumindest teilweise anliegt oder vollständig zusammengedrückt oder weggeschmolzen wird.

7. Karosserieteil nach Anspruch 6, **dadurch gekennzeichnet, daß** das Volumen der Erhebungen (11) und das Volumen der Räume zwischen den Erhebungen (11) im wesentlichen gleich groß ist.

8. Karosserieteil nach einem der voranstehenden Ansprüche, **dadurch gekennzeichnet, daß** die Außenhaut (20) im montierten Zustand großflächig am Schaumstoff (10) anliegt.

9. Karosserieteil nach mindestens einem der voranstehenden Ansprüche, **dadurch gekennzeichnet, daß** die Außenhaut (20) aus einem vorgeformten Kunststoff- oder einem Blechteil besteht.

10. Karosserieteil nach einem der voranstehenden _{A}nsprüche, **dadurch gekennzeichnet, daß** der Rahmen (30) aus zumindest einem umgeformten Blechzuschnitt besteht oder einstückig in einem Urformverfahren, z.B. Gießen oder Spritzgießen, hergestellt ist.

11. Karosserieteil nach einem der voranstehenden Ansprüche, **dadurch gekennzeichnet, daß** Aufnahmeeinrichtungen (31; 32) für Scharniere oder einen Schloßkörper (6) an dem Rahmen (30) ausgebildet sind.

12. Karosserieteil nach einem der voranstehenden Ansprüche, **dadurch gekennzeichnet, daß** an dem Rahmen (30) Verstärkungselemente (37) für einen Seitenaufprallschutz angeordnet sind.

13. Karosserieteil nach Anspruch 12, **dadurch gekennzeichnet, daß** die Verstärkungselemente (37) mit den Aufnahmeeinrichtungen (31; 32) für Scharniere und dem Schloßkörper (6) verbunden sind.

14. Karosserieteil nach einem der voranstehenden Ansprüche, **dadurch gekennzeichnet, daß** der Schaumstoff (10) aus einem Schaumkunststoff oder einem Metallschaum besteht.

15. Karosserieteil nach Anspruch 14, **dadurch gekennzeichnet, daß** in dem Schaumstoff (10) Verstärkungsmaterial eingearbeitet ist.

16. Karosserieteil nach Anspruch 15, **dadurch gekennzeichnet, daß** das Verstärkungsmaterial als ein Gewebe oder als Fasern ausgebildet ist.

17. Karosserieteil nach einem der voranstehenden Ansprüche, **dadurch gekennzeichnet, daß** der Schaumstoff (10) nach dem Aufbringen auf dem Rahmen (30) eine zur Außenhaut (20) hin vollflächig geschlossene Oberfläche aufweist.

18. Karosserieteil nach Anspruch 17, **dadurch gekennzeichnet, daß** der umschäumte Rahmen (30) ein offenes Kastenprofil (7) zur Aufnahme eines Trägermoduls (4) bildet.

19. Karosserieteil nach Anspruch 18, **dadurch gekennzeichnet, daß** das Trägermodul (4) als Schaumteil (40) ausgebildet ist.

20. Karosserieteil nach Anspruch 18 oder 19, **dadurch gekennzeichnet, daß** an dem Trägermodul (4) Funktionselemente (41, 42, 43, 44, 45, 46, 47) angebracht oder eingearbeitet sind.

21. Karosserieteil nach einem der Ansprüche 18 bis 20, **dadurch gekennzeichnet, daß** die Kontur einer auf dem Trägermodul (4) befestigten, nicht selbsttragenden Türinnenverkleidung (5) im wesentlichen der Kontur der dem Fahrzeuginnenraum zugewandten Seite des Trägermoduls (4) entspricht.

22. Karosserieteil nach einem der voranstehenden Ansprüche, **dadurch gekennzeichnet, daß** auf dem Rahmen (30) ein Fensterrahmen (33) zur Führung einer Fensterscheibe (36) befestigt ist.

23. Verfahren zur Herstellung eines Karosserieteils für Kraftfahrzeuge, insbesondere einer Fahrzeugtür, einer Motorhaube oder eines Radkastens, aus einem tragenden Rahmen und einer den äußeren Abschluß des Karosserieteils bildenden Außenhaut,
**dadurch gekennzeichnet,**
**daß** der Rahmen (30) mit einem Schaumstoff (10) umspritzt wird und die Außenhaut (20) über den Schaumstoff (10) an dem Rahmen (30) befestigt wird.

24. Verfahren nach Anspruch 23, **dadurch gekennzeichnet, daß** die Außenhaut (20) mit dem Schaumstoff (10) verklebt oder verschweißt wird.

25. Verfahren nach Anspruch 23 oder 24, **dadurch gekennzeichnet, daß** die Außenhaut (20) großflächig an dem Schaumstoff (10) anliegt.

26. Verfahren nach einem der Ansprüche 23 bis 25, **dadurch gekennzeichnet, daß** der Rahmen (30) dergestalt mit dem Schaumstoff (10) umspritzt wird, daß zur Außenhaut (20) hin eine geschlossene Oberfläche entsteht.

27. Verfahren nach einem der Ansprüche 23 bis 26, **dadurch gekennzeichnet, daß** die Außenhaut (20) nach dem Anbau des umschäumten Rahmens (30) an der Karosserie an dem Schaumstoff (10) befestigt wird.

28. Verfahren nach einem der Ansprüche 23 bis 27, **dadurch gekennzeichnet, daß** die Außenhaut (20) zusammen mit der Karosserie lackiert und anschließend an dem Rahmen (30) befestigt wird.

29. Verfahren nach einem der Ansprüche 23 bis 28, **dadurch gekennzeichnet, daß** während des Befestigungsvorganges der Außenhaut (20) an dem Schaumstoff (10) die Außenhaut (20) bezüglich festgelegter Referenzpunkte räumlich ausgerichtet wird, wobei der Schaumstoff (10) mittels der Außenhaut (20) verdichtet oder weggeschmolzen wird.

30. Verfahren nach Anspruch 29, **dadurch gekennzeichnet, daß** die Referenzpunkte für jede Karosserie individuell festgelegt werden.

## Claims

1. Body part for motor vehicles, more particularly a vehicle door, an engine bonnet or a wheel arch, with a supporting frame and an outer skin forming the outer closure of the body part,
**characterised in that**
the frame (30) is surrounded in foam (10) and the outer skin (20) is fixed on the frame (30) through the foam (10).

2. Body part according to claim 1, **characterised in that** the outer skin (20) is stuck or welded to the foam (10).

3. Body part according to claim 1, **characterised in that** fixing elements are formed on the foam (10) for the positive-locking fixing of the outer skin (20).

4. Body part according to one of the preceding claims, **characterised in that** the foam (10) is designed with profiling on the side facing the outer skin (20).

5. Body part according to claim 4, **characterised in that** the outer skin (20) bears against protrusions (11) which are designed in particular as ribs or studs on the profiled foam (10).

6. Body part according to claim 5, **characterised in that** the protrusions (11) are dimensioned so that when compensating all tolerances during fixing any protrusion either bears at least in part against the outer skin (20) or is completely compressed or melted away.

7. Body part according to claim 6, **characterised in that** the volume of the protrusions (11) and the volume of the spaces between the protrusions (11) are substantially the same size.

8. Body part according to one of the preceding claims, **characterised in that** the outer skin (20) in the assembled state bears with a large surface area against the foam (10).

9. Body part according to at least one of the preceding claims, **characterised in that** the outer skin (20) consists of a pre-formed plastics or sheet metal part.

10. Body part according to one of the preceding claims, **characterised in that** the frame (30) consists of a re-shaped sheet metal blank or is made in one piece in an original shaping process, e.g. casting or injection moulding.

11. Body part according to one of the preceding claims, **characterised in that** locator devices (31, 32) are formed on the frame (30) for hinges or a lock body (6).

12. Body part according to one of the preceding claims, **characterised in that** reinforcement elements (37) for a side impact protection are arranged on the frame (30).

13. Body part according to claim 12, **characterised in that** the reinforcement elements (37) are connected to the locator devices (31; 32) for the hinges and lock body (6).

14. Body part according to one of the preceding claims, **characterised in that** the foam material (10) consists of a foamed plastics or metal foam.

15. Body part according to claim 14, **characterised in that** reinforcement material is incorporated into the foam material (10).

16. Body part according to claim 15, **characterised in that** the reinforcement material is formed as woven fabric or fibres.

17. Body part according to one of the preceding claims **characterised in that** the foam material (10) after being applied to the frame (30) has a surface which is completely closed in respect of the outer skin (20).

18. Body part according to claim 17, **characterised in that** the foam-encased frame (30) forms an open box profile (7) for housing a support module (4).

19. Body part according to claim 18, **characterised in that** the support module (4) is formed as a foamed part (40).

20. Body part according to claim 18 or 19, **characterised in that** function elements (41, 42, 43, 44, 45, 46, 47) are fitted or worked in on the support module (4).

21. Body part according to one of claims 18 to 20, **characterised in that** the contour of a non self-supporting door inside trim (5) fixed on the support module (4) corresponds substantially to the contour of the side of the support module (4) facing the inside of the vehicle.

22. Body part according to one of the preceding claims **characterised in that** a window frame (33) is fixed on the frame (30) to guide a window pane (36).

23. Method for manufacturing a body part for motor vehicles, more particularly vehicle door, an engine bonnet or a wheel arch, from a supporting frame and an outer skin which forms the outer closure of the body part, **characterised in that** the frame (30) is injection moulded in foam (10) and the outer skin (20) is fixed on the frame (30) through the foam (10).

24. Method according to claim 23 **characterised in that** the outer skin (20) is welded or stuck to the foam (10).

25. Method according to claim 23 or 24, **characterised in that** the outer skin (20) bears with a large surface area against the foam (10).

26. Method according to one of claims 23 to 25, **characterised in that** the frame (30) is injection moulded in foam (10) so that a closed surface is formed in respect of the outer skin (20).

27. Method according to one of claims 23 to 26,
**characterised in that** the outer skin (20) is fixed on the foam (10) after fitting the foamed frame (30) on the body.

28. Method according to one of claims 23 to 27, **characterised in that** the outer skin (20) is painted together with the body and then fixed on the frame (30).

29. Method according to one of claims 23 to 28, **characterised in that** during the process of fixing the outer skin (20) on the foam (10) the outer skin (20) is aligned spatially relative to fixed reference points wherein the foam (10) is compressed or melted away by means of the outer skin (20).

30. Method according to claim 29, **characterised in that** the reference points are fixed individually for each body.

## Revendications

1. Pièce de carrosserie pour véhicules automobiles, notamment portière de véhicule, capot moteur ou passage de roue, comportant un cadre porteur et une coque extérieure qui forme la terminaison extérieure de la pièce de carrosserie,
**caractérisée en ce**
**que** le cadre (30) est enrobé par un matériau mousse et la coque extérieure (20) est fixée au cadre (30) par l'intermédiaire du matériau mousse (10).

2. Pièce de carrosserie selon la revendication 1, **caractérisée en ce que** la coque extérieure (20) est collée ou soudée au matériau mousse.

3. Pièce de carrosserie selon la revendication 1, **caractérisée en ce que** des éléments de fixation pour la fixation selon une liaison par formes complémentaires de la coque extérieure (20) sont formés sur le matériau mousse (10).

4. Pièce de carrosserie selon l'une des revendications précédentes, **caractérisée en ce que** le matériau mousse (10) est agencé avec une configuration profilée sur le côté tourné vers la coque extérieure (20).

5. Pièce de carrosserie selon la revendication 4, **caractérisée en ce que** la coque extérieure (20) s'applique contre des bossages (11) du matériau mousse profilé (10), qui sont agencés notamment sous la forme de nervures ou de boutons.

6. Pièce de carrosserie selon la revendication 5, **caractérisée en ce que** les bossages (11) sont dimensionnés de telle sorte que lors de la compensation de toutes les tolérances pendant la fixation, chaque bossage s'applique au moins partiellement contre la coque extérieure (20) ou est complètement comprimé ou supprimé par fusion.

7. Pièce de carrosserie selon la revendication 6, **caractérisée en ce que** le volume des bossages (11) et le volume des espaces entre les bossages (11) sont sensiblement identiques.

8. Pièce de carrosserie selon au moins l'une des revendications précédentes, **caractérisée en ce qu'**à l'état monté, la coque extérieure (20) s'applique sur une surface étendue contre le matériau mousse (10).

9. Pièce de carrosserie selon au moins l'une des revendications précédentes, **caractérisée en ce que** la coque extérieure (20) est constituée par une pièce préformée en matière plastique ou par une pièce de tôle.

10. Pièce de carrosserie selon l'une des revendications précédentes, **caractérisée en ce que** le cadre (30) est constitué par au moins un flan en tôle déformé ou est réalisé d'un seul tenant lors d'un procédé de formage, par exemple lors de la coulée ou de la coulée par injection.

11. Pièce de carrosserie selon l'une des revendications précédentes, **caractérisée en ce que** des dispositifs de réception (31; 32) pour des charnières ou un corps de serrure (6) sont formés sur le cadre (30).

12. Pièce de carrosserie selon l'une des revendications précédentes, **caractérisée en ce que** des éléments de renfort (37) sont disposés sur le cadre (30) pour réaliser une protection vis-à-vis de chocs latéraux.

13. Pièce de carrosserie selon la revendication 12, **caractérisée en ce que** les éléments de renfort (37) sont reliés aux dispositif de réception (31; 32) pour des charnières et le corps de serrure (6).

14. Pièce de carrosserie selon l'une des revendications précédentes, **caractérisée en ce que** le matériau mousse (10) est formé d'une matière plastique à l'état de mousse ou d'une mousse métallique.

15. Pièce de carrosserie selon la revendication 14, **caractérisée en ce qu'**un matériau de renfort est inséré dans le matériau mousse (10).

16. Pièce de carrosserie selon la revendication 15, **caractérisée en ce que** le matériau de renfort est agencé sous la forme d'un tissu ou sous la forme de fibres.

17. Pièce de carrosserie selon l'une des revendications précédentes, **caractérisée en ce que** le matériau mousse (10) comporte, après son application sur le cadre (30), une surface complètement fermée en direction de la coque extérieure (20).

18. Pièce de carrosserie selon la revendication 17, **caractérisée en ce que** le cadre enrobé (12) forme un profilé de boîte ouvert (7) servant à loger un module de support (4).

19. Pièce de carrosserie selon la revendication 18, **caractérisée en ce que** le module de support (4) est agencé sous la forme d'une partie en mousse (40).

20. Pièce de carrosserie selon la revendication 18 ou 19, **caractérisée en ce que** les éléments fonctionnels (41, 42, 43, 44, 45, 46, 47) sont montés sur ou inséré dans le module de support (4).

21. Pièce de carrosserie selon l'une des revendications 18 à 20, **caractérisée en ce que** le contour d'un habillage de portière intérieur (5) non autoportant et fixé sur le module de support (4) correspond essentiellement au contour du côté, tourné vers l'espace intérieur du véhicule, du module de support (4).

22. Pièce de carrosserie selon l'une des revendications précédentes, **caractérisée en ce qu'**un cadre de fenêtre (33) est fixé au cadre (30) pour le guidage d'une vitre de fenêtre (36).

23. Procédé pour fabriquer une pièce de carrosserie pour véhicules automobiles, notamment une portière de véhicule, un capot moteur ou un passage de roue, comportant un cadre porteur et une coque extérieure qui forme la terminaison extérieure de la pièce de carrosserie,
**caractérisé en ce**
**qu'**on enrobe par injection le cadre (30) avec un matériau mousse et qu'on fixe la coque extérieure (20) au cadre (30) au moyen du matériau mousse (10).

24. Procédé selon la revendication 23, **caractérisé en ce que** la coque extérieure (20) est colle ou soudée au matériau mousse (10).

25. Procédé selon la revendication 23 ou 24, **caractérisé en ce que** la coque extérieure (20) s'applique sur une surface étendue contre le matériau mousse (10).

26. Procédé selon l'une des revendications 23 à 25, **caractérisé en ce qu'**on enrobe par injection le cadre (30) avec le matériau mousse (10) de telle sorte qu'il apparaît une surface fermée en direction de la coque extérieure (20).

27. Procédé selon l'une des revendications 23 à 25, **caractérisé en ce qu'**on fixe la coque extérieure (20) après le montage du cadre (30) enrobé de mousse sur la carrosserie, sur le matériau (10).

28. Procédé selon l'une des revendications 23 à 27, **caractérisé en ce qu'**on peint la coque extérieure (20), conjointement avec la carrosserie et on la fixe ensuite au cadre (30).

29. Procédé selon l'une des revendications 23 à 28, **caractérisé en ce que** pendant l'opération de fixation de la coque extérieure (20) sur le matériau mousse (10), on oriente la coque extérieure par rapport à des points de référence fixés, le matériau mousse (10) étant densifié ou éliminé par fusion au moyen la coque extérieure.

30. Procédé selon la revendication 19, **caractérisé en ce que** les points de référence sont fixés individuellement pour chaque carrosserie.
